# EUROPEAN PATENT APPLICATION

(11) **EP 1 837 350 A1**
(43) Date of publication of application: **26.09.2007**
(21) Application number: 05806733.1
(22) Date of filing: 09.11.2005
(51) Int. Cl.: C08F 8/30, C08F 8/42

(54) **PROCESS FOR PRODUCTION OF MODIFIED POLYMERS AND MODIFIED POLYMERS PRODUCED THEREBY**

(30) Priority: 11.01.2005 JP 2005003845
(71) Applicant: THE YOKOHAMA RUBBER CO., LTD., Tokyo 105-8685 (JP)
(72) Inventor: ASHIURA, Makoto, THE YOKOHAMA RUBBER CO., LTD., Hiratsuka-shi, Kanagawa 2548601 (JP); ARAKAWA, Kazuo, THE YOKOHAMA RUBBER CO., LTD., Hiratsuka-shi, Kanagawa 2548601 (JP); WATANABE, Jiro, THE YOKOHAMA RUBBER CO., LTD., Hiratsuka-shi, Kanagawa 2548601 (JP); KAWAZURA, Tetsuji, THE YOKOHAMA RUBBER CO., LTD., Hiratsuka-shi, Kanagawa 2548601 (JP)
(74) Representative: HOFFMANN EITLE
(86) International application number: PCT/JP2005/020984
(87) International publication number: WO 2006/075445

(57) **Abstract**

A method for producing a modified polymer by reacting a tetramethylpiperidinyloxy (TEMPO) derivative having a functional group (A) and a polymer in the presence of a radical initiator to produce a polymer having the functional group (A) grafted thereon, and then, optionally, after adding additives, reacting the resultant reaction product with a compound having a functional group (B) capable of reacting with the functional group (A), whereby it is possible to simply and inexpensively introduce compounds having various types of functional groups into a nonpolar polymer.

## Description

### TECHNICAL FIELD

The present invention relates to a method for producing a modified polymer, more specifically it relates to a method for producing a modified polymer by inexpensively and simply introducing a functional group into a polymer such as low polarity styrene-based thermoplastic elastomer, thermoplastic resin to enhance the polarity or reactivity of the polymer, a modified polymer obtained by that methods, and a polymer composition including the same.

### BACKGROUND ART

Elastomers such as styrene-based thermoplastic elastomer or thermoplastic resins such as a polypropylene, polyethylene, the problems, due to their low polarity, that they have a low affinity with polar resins such as polyamide, polyester and are also inferior in bondability with glass, etc. Accordingly, to enhance the polarity of the polymer or enable a reaction at the interface, attempts are being made to graft a functional monomer onto a polymer using a radical initiator.

For example, Japanese Patent Publication (A) No. 6-33027 proposes a technology for grafting an unsaturated carboxylic acid or acid anhydride and epoxy silane onto a styrene-ethylene-butylene-styrene copolymer (SEBS). Further, Japanese Patent Publication (A) No. 5-59253 proposes a technology for grafting an epoxy group-containing monomer onto a polypropylene and adding the resultant graft polymer to a high impact polystyrene (HIPS) together with a glass fiber.

However, according to the above prior art, during modification, the polymer is very liable to decrease molecular weight or to cause gellation. Further, the radical initiator and functional monomer are liable to be directly reacted to decrease the graft efficiency and a homopolymer is formed in the system. Therefore, the inventors previously proposed a method for introducing a functional group capable of eliminating the above defects by adjusting the ratio of the TEMPO derivative and the radical initiator at the time of the modification (see Japanese Patent Application No. 2004-311135). However, depending upon the application of the polymer, various functional groups are desirably introduced, and therefore, it is necessary to synthesize, in advance, TEMPO derivatives having various types of functional groups. This has the problem of increasing the costs.

### DISCLOSURE OF THE INVENTION

Accordingly, an object of the present invention is to provide a method for producing a modified polymer which uses a certain TEMPO derivative to introduce a desired functional group into a polymer so as to simply and inexpensively modify the polymer, without using TEMPO derivatives having various types of functional groups.

In accordance with the present invention, there is provided a method for producing a modified polymer comprising: reacting a tetramethylpiperidinyloxy (TEMPO) derivative having a functional group (A) and a polymer in the presence of a radical initiator to produce a polymer having the functional group (A) grafted therein; and then, if necessary, adding additives, then reacting the result with a compound having a functional group (B) capable of reacting with the functional group (A).

In accordance with the present invention, it is possible to use a TEMPO derivative having a certain functional group (A) to simply and inexpensively introduce various desired functional groups (B) into the polymer. Further, it is possible to use this method to, for example, introduce a silane compound having an isocyanate group into the polymer so as to improve the bondability of a nonpolar polymer with glass.

### BEST MODE FOR CARRYING OUT THE INVENTION

The singular form used in the present description and attached "claims" should be understood as including the plural form, except when otherwise clear it does not from the context.

According to the present invention, by, first, reacting a TEMPO derivative having a functional group (A) and a radical initiator with a non-polar or low polarity polymer to produce a polymer on which the functional group (A) is grafted, then, if necessary, adding additives, then adding a compound having a functional group (B) capable of reacting with the functional group (A), the inventors succeeded in the production of a modified polymer having various types of functional groups (B).

In this way, the inventors found that, by reacting a TEMPO derivative having a functional group (A) and which is stable at an ordinary temperature and a radical initiator with a polymer to produce a polymer to which a functional group (A) is grafted and adding a compound having a functional group (B) capable of reacting with that functional group (A) for a reaction, a desired functional group (B) can be simply introduced into the polymer. Further, the inventors discovered that, when the compound having the functional group (B) is a silane compound, the produced modified polymer exhibits a good bondability with glass.

According to the present invention, first, a reaction system where a TEMPO derivative having a functional group (A) (e.g., OH group) is reacted with a polymer in the presence of a peroxide (e.g., di-tert-butyl peroxide, dicumyl peroxide, etc.), then this is reacted with a silane compound having a functional group (B) (e.g., NCO group) will now be explained.

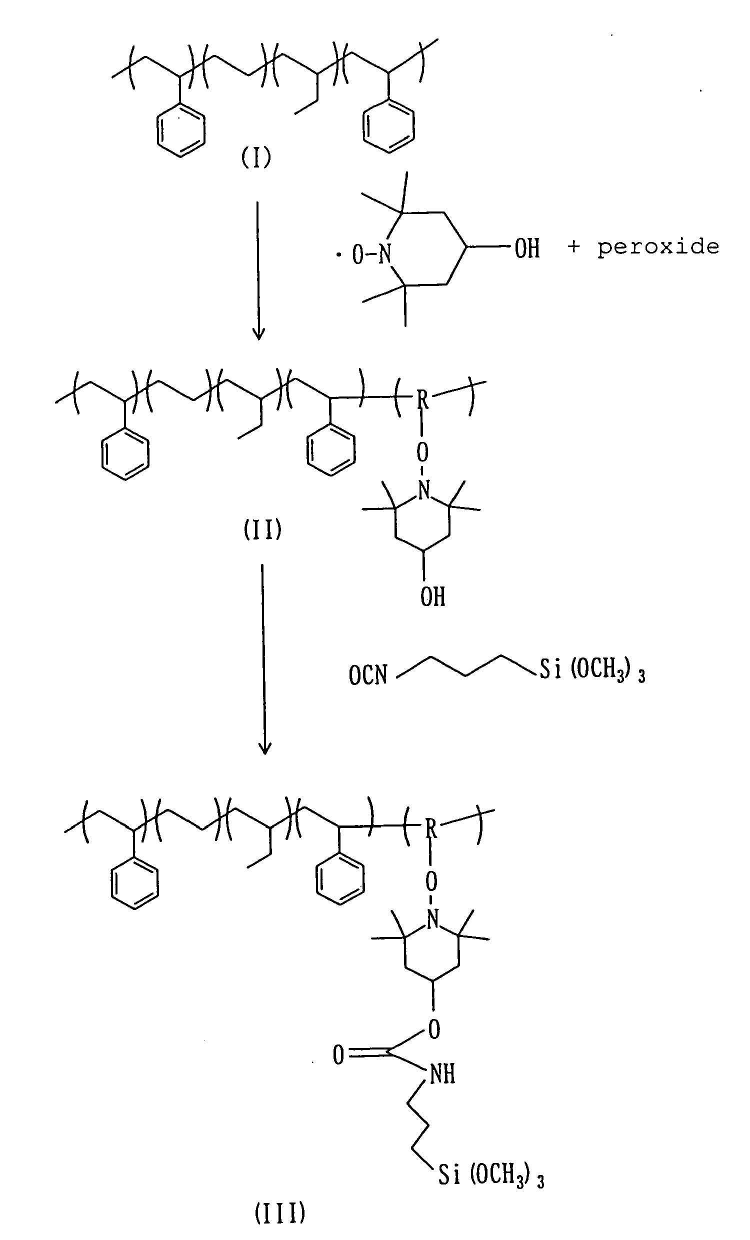

As a polymer capable of being modified in according to the present invention, for example, a styrene-butadiene-styrene block copolymer, a styrene-isoprene-styrene copolymer, a styrene-ethylene-butene-styrene block copolymer, a styrene-ethylene-propylene-styrene copolymer, a polyethylene, polypropylene, polystyrene, polyaromatic vinyl, polyolefin, polyisoprene, various types of styrene-butadiene copolymers, various types of polybutadienes, an acrylonitrile-butadiene copolymer, a polyisobutylene, polybutene, butyl rubber, a halogenated butyl rubber, brominated isobutylene-paramethyl styrene copolymer, a styrene-isoprene-butadiene copolymer, chloroprene rubber, an ethylene-propylene-diene terpolymer rubber, an ethylene-propylene copolymer, an ethylene-propylene-butene terpolymer, acryl rubber, silicone rubber, fluororubber, epichlorohydrin rubber, various types of polymethacrylic acid esters, various types of polyethers, various types of polysulfides, various types of polyvinyl ethers, various types of polyesters, various types of polyamides, cellulose, starch, various types of polyurethane, various types of polyureas, various types of polyamine, etc. may be mentioned.

As a stable free radical TEMPO derivative having a nitroxide radical (-N-O·) in the molecule thereof usable in the present invention, the following compounds may be illustrated. These compounds are preferably reacted in amounts of 0.01 to 40 parts by weight, based upon 100 parts by weight of the polymer. 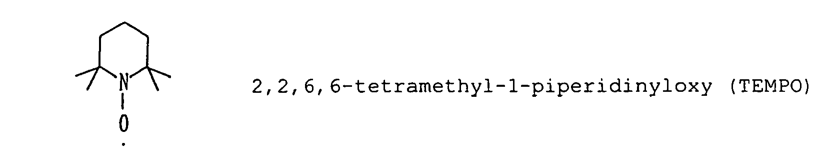 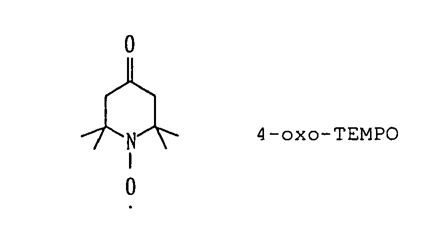 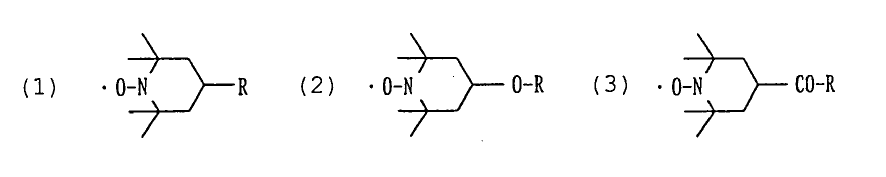 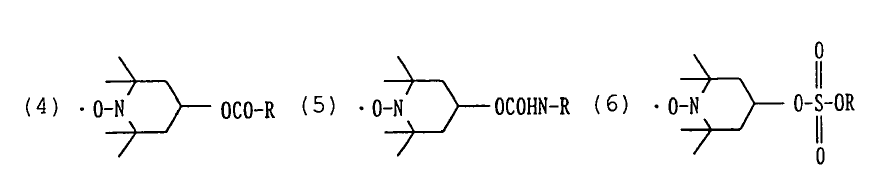 (in the above formulae (1) to (6), R indicates a C₁ to C₃₀ alkyl group, allyl group, amino group, isocyanate group, hydroxy group, thiol group, vinyl group, epoxy group, thiirane group, carboxyl group, carbonyl group-containing group (e.g., cyclic acid anhydride such as succinic anhydride, maleic anhydride, glutamic anhydride, phthalic anhydride); organic groups having a functional group amide group, ester group, imide group, nitrile group, thiocyan group, C₁ to C₂₀ alkoxy group, silyl group, alkoxysilyl group, nitro group).

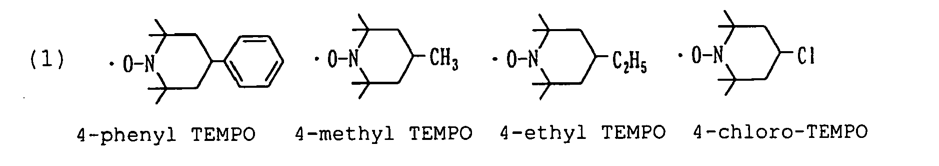

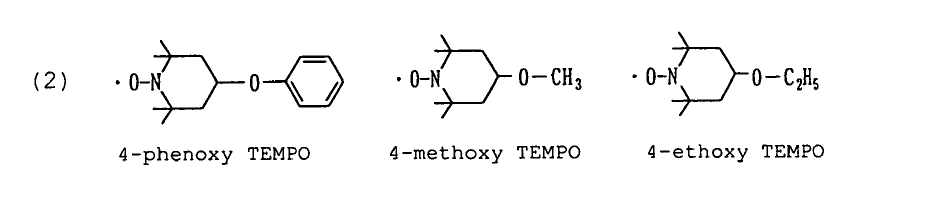

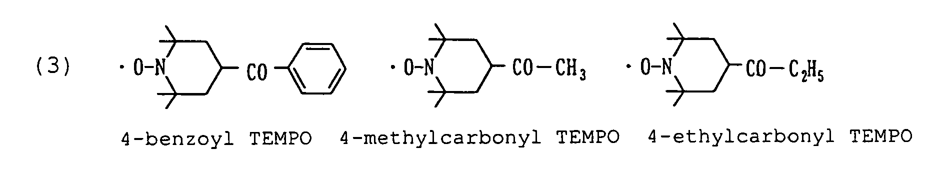

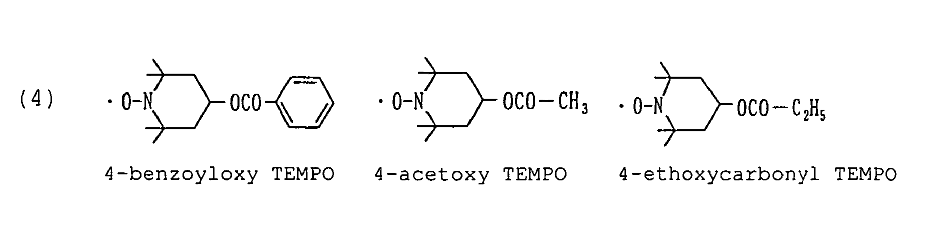

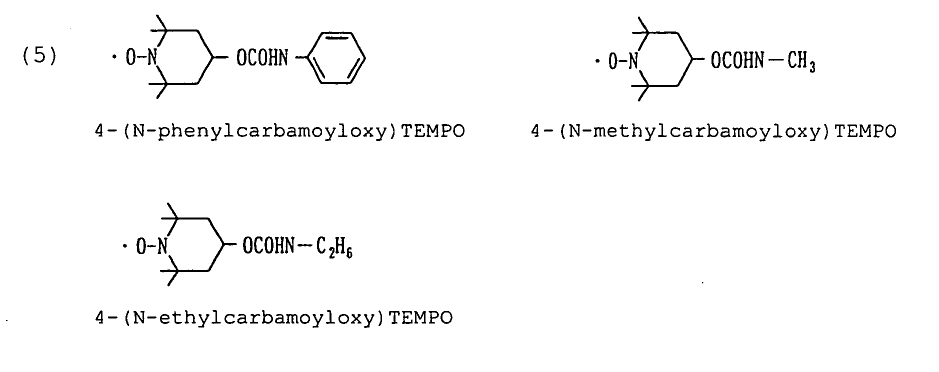

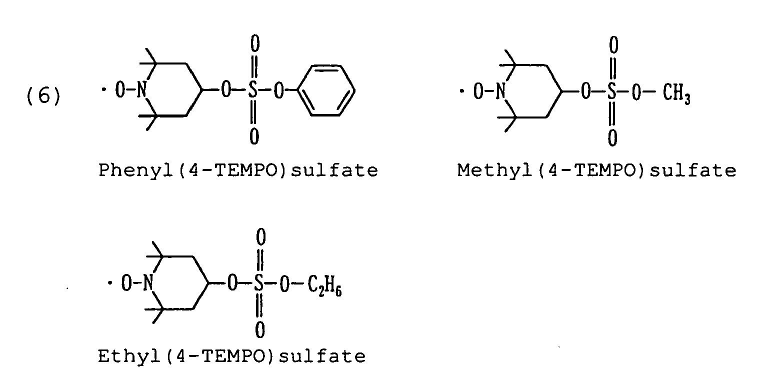

Other examples are given below: 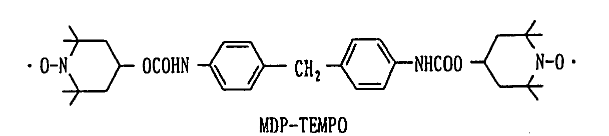 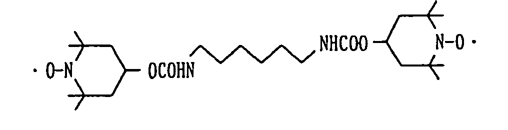 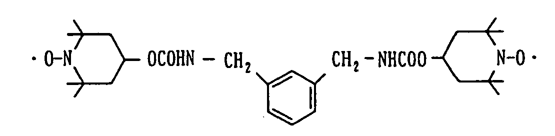 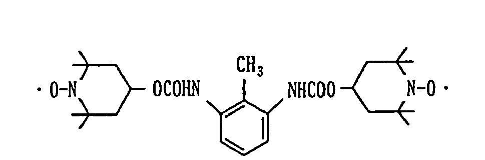 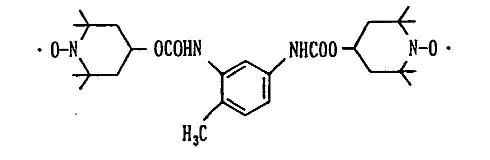 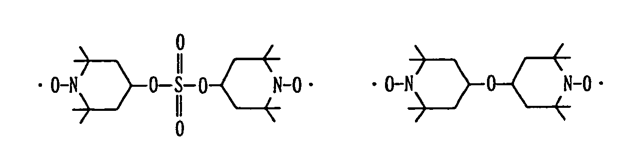 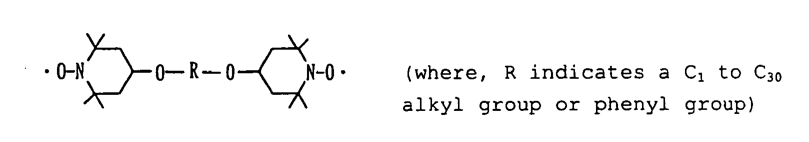 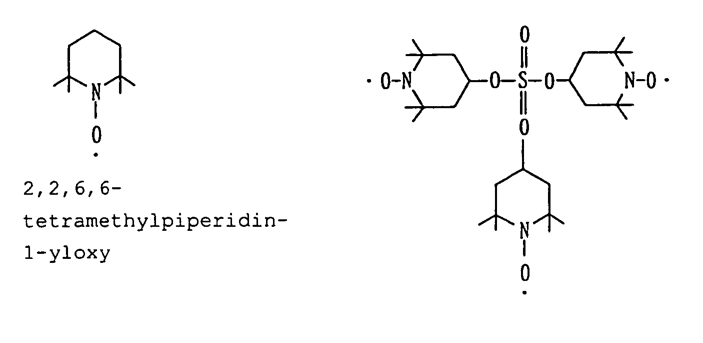 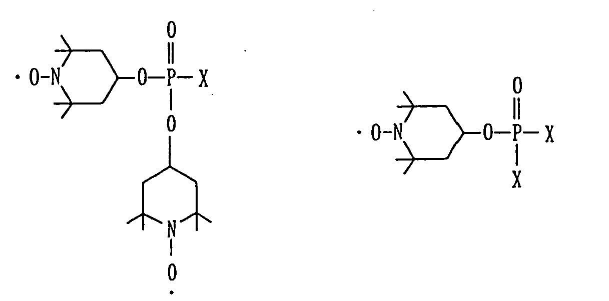 X; Br or Cl 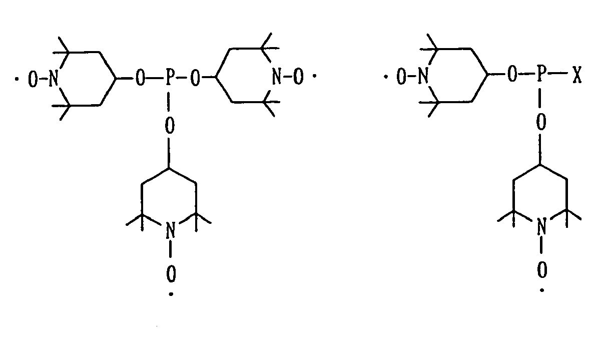 X; Br or Cl

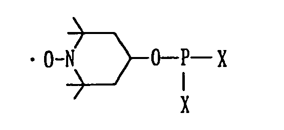

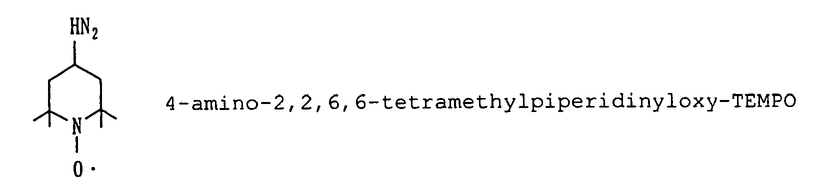

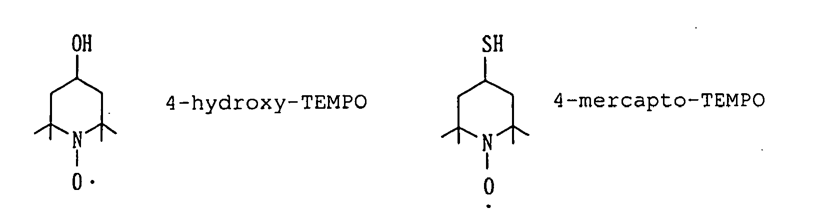

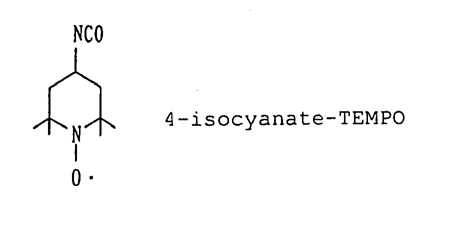

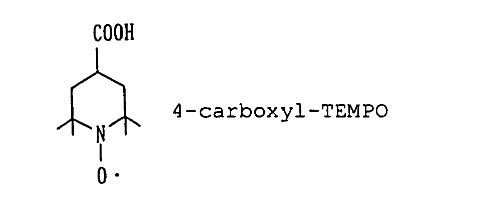

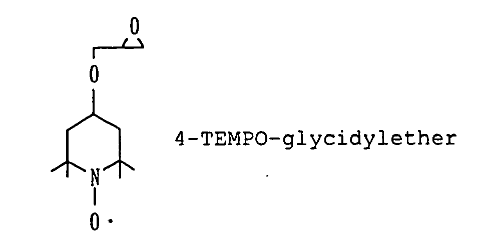

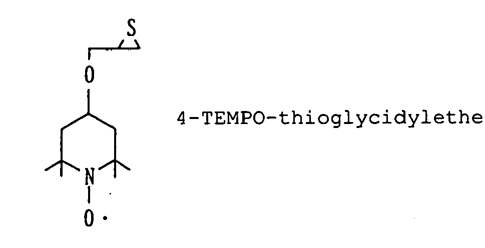

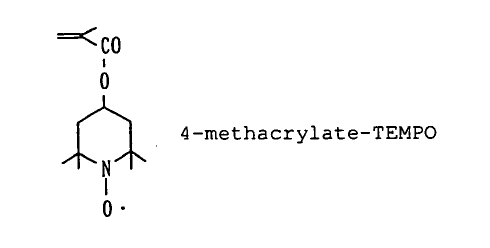

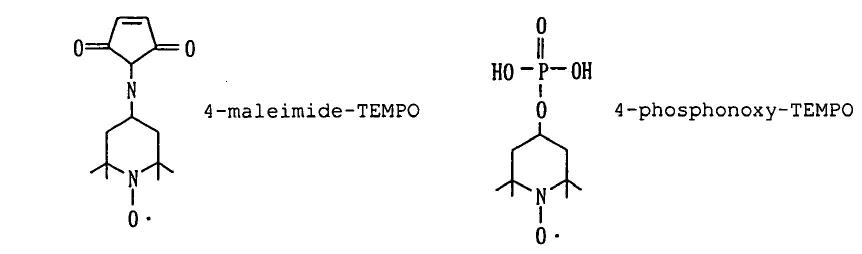

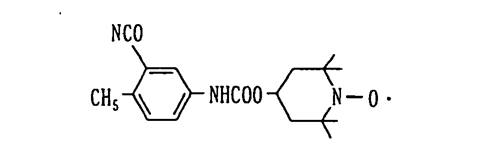

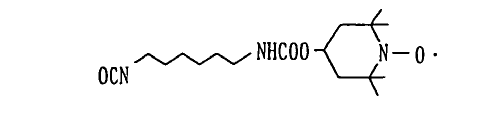

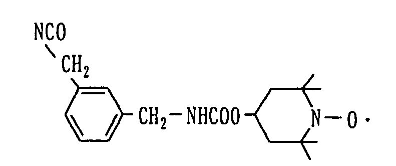

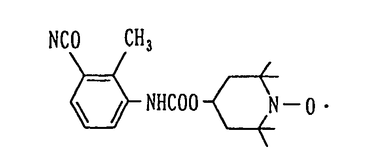

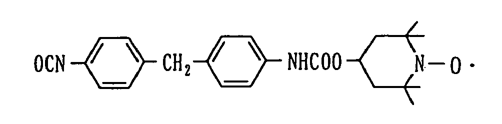

As the means for generating carbon radicals in the polymer, a radical initiator is added to the reaction system. As the radical initiator usable in the present invention, for example, organic peroxides such as benzoyl peroxide (BPO), t-butyl peroxybenzoate (Z), dicumyl peroxide (DCP), t-butylcumyl peroxide (C), di-t-butyl peroxide (D), 2,5-dimethyl-2,5-di-t-butylperoxyhexane (2,5B), 2,5-dimethyl-2,5-di-t-butylperoxy-3-hexyne (hexyne-3), 2,4-dichloro-benzoyl peroxide (DC-BPO), di-t-butylperoxy-di-isopropylbenzene (P), 1,1-bis(t-butylperoxy)-3,3,5-trimethyl-cyclohexane (3M), n-butyl-4,4-bis(t-butylperoxy)valerate, 2,2-bis(t-butylperoxy)butane, and radical generators such as azodicarbonamide (ADCA), azobisisobutyronitrile (AIBN), 2,2'-azobis-(2-amidinopropane)dihydrochloride, dimethyl 2,2'-azobis(isobutyrate), azobis-cyanvaleric acid (ACVA), 1,1'-azobis-(cyclohexane-1-carbonitrile) (ACHN), 2,2'-azobis-(2,4-dimethylvaleronitrile) (ADVN), azobismethylbutyronitrile (AMBN), 2,2'-azobis-(4-methoxy-2,4-dimethylvaleronitrile) may be mentioned. These may be added to the reaction system of the polymer and the compound having a nitroxide radical (mixed system, contact system) so as to generate carbon radicals in the polymer. The amount of the radical initiator added is, based upon 100 parts by weight of the polymer, preferably 0.1 to 15 parts by weight, more preferably 0.2 to 10 parts by weight.

As the functional group (A) usable in the present invention, for example, a hydroxy group, amino group, carboxyl group, oxirane group, thiirane group, acid anhydride group, isocyanate group, isothiocyanate group, halogen, allyl group, vinyl group, nitrile group, carbonyl group, imino group, silyl group, alkoxysilyl group, thiol, disulfide, polysulfide, nitro group, acid halide, lactone, ester, amide group, oxime group, phosphagen, phosphoryl group, sulfonyl group, (meth)acrylate, oxetane etc. may be mentioned.

On the other hand, as a functional group (B) capable of reacting with the functional group (A), while depending upon the type of the functional group (A), for example, an isocyanate group, isothiocyanate group, acid anhydride group, oxirane group, thiirane group, halogen, amino group, thiol, carboxyl group, vinyl group, allyl group, imino group, (meth)acrylate, disulfide, polysulfide, silyl group, alkoxysilyl group, nitrile group, carbonyl group, acid halide, nitro group, lactone, ester, amide group, oxime group, phosphagen, phosphoryl group, sulfonyl group, oxetane etc. may be mentioned. As the functional group (A), a hydroxy group, amino group, carboxyl group, oxirane group etc. are preferable, while as the functional group (B), an isocyanate group, isothiocyanate group, oxirane group, thiirane group, (meth)acrylate, thiol, acid anhydride group, amino group etc. are preferable.

The polymer composition comprising the modified polymer according to the present invention may include, in addition to the above-mentioned ingredients, various types of additive generally compounded into thermoplastic elastomers and thermoplastic resins such as a reinforcing agent, filler, softening agent, antioxidant, processing aid, pigment, cross-linking agent. These additives may be compounded into the compositions by a general method. The compounding amounts of these additives may be made the conventional general compounding amounts so long as the object of the present invention is not adversely affected.

### EXAMPLES

Examples will now be used to further explain the present invention, but the present invention is by no means limited to these Examples.

### Examples 1 to 2 and Comparative Examples 1 to 2

The starting materials used in the Examples and Comparative Examples are as follows:
SEBS: Styrene-ethylene-butene-styrene copolymer [made by Asahi Kasei, H1031]
PP: Random polypropylene [made by SunAllomer, SunAllomer PMC20M]
Polybutene: [made by Nippon Petrochemicals, HV-100]
Di-t-butyl peroxide: [made by NOF Corporation, Perbutyl D]
Dicumyl peroxide: [made by NOF Corporation, Percumyl D]
OH-TEMPO: 4-hydroxy-2,2,6,6-tetramethylpiperidinyl-1-oxyl [made by Asahi Denka, LA7RD]
3-trimethoxysilylpropylisocyanate: [made by Shin-Etsu Chemical]
TDI: Tolylene diisocyanate [made by Mitsu Takeda Chemicals, Cosmonate 100]

### Production of Modified SEBS (Example 1)

SEBS in an amount of 350.0 g, di-t-butyl peroxide in an amount of 7.40 g and OH-TEMPO in an amount of 10.5 g were charged into an internal Banbury mixer set at a temperature of 100°C and mixed for 15 minutes. Nitrogen purge was performed for 5 minutes while mixing the resultant mixture in the internal Banbury mixer set at a temperature of 100°C. The temperature was increased to 175°C during the mixing. After mixing for 30 minutes, the temperature was decreased to 150°C, then 3-trimethoxysilylpropyl isocyanate in an amount of 9.53 g was added into the system, which was then mixed for 10 minutes. A part of the polymer obtained was dissolved in toluene, then a reprecipitation operation was performed to isolate the polymer. The purified product was used for IR analysis and ¹H-NMR analysis to confirm the presence of urethane bonds and the introduction of alkoxysilyl groups. The introduction rate was 0.44 mol%.

### Production of Modified PP (Example 2)

Polypropylene in an amount of 350.0 g and OH-TEMPO in an amount of 10.5 g were dry compounded and mixed in an internal Banbury mixer set at a temperature of 145°C. Nitrogen purge was performed for 5 minutes. Di-t-butyl peroxide in an amount of 7.40 g was injected from an inlet, through which nitrogen had been blown. While mixing, the system was increased to a temperature of 175°C, then the system was further mixed for 30 minutes. Thereafter, the temperature was decreased to 150°C, then 3-trimethoxysilylpropyl isocyanate in an amount of 9.53 g was added into the system, which was then mixed for 10 minutes. A part of the polymer obtained was dissolved in toluene, then a reprecipitation operation was performed to isolate the polymer. The purified product was used for IR analysis and ¹H-NMR analysis to confirm the presence of urethane bonds and the introduction of alkoxysilyl groups. The introduction rate was 0.48 mol%.

### Production of Modified Polybutene (Example 3)

A 300 ml flask was charged with polybutene in an amount of 40.3 g (0.717 mol) and then di-t-butyl peroxide in an amount of 5.27 g (0.0211 mol, 2.95 mol%) and OH-TEMPO in an amount of 6.18 g (0.0358 mol, 5.0 mol%). The system was stirred, under a nitrogen atmosphere, at 147°C for 5 hours. Next, TDI in an amount of 0.549 g (0.00315 mol) was added thereto and the resultant mixture was stirred overnight at 90°C. ¹H-NMR and IR analysis confirmed the urethane bonds and the introduction of isocyanate groups. The introduction rate was 4.3 mol%.

### Comparative Example 1

SEBS in an amount of 350.0 g and 3-trimethoxysilylpropyl isocyanate in an amount of 9.53 g were mixed in an internal Banbury mixer heated at 150°C for 10 minutes.

### Comparative Example 2

PP in an amount of 350.0 g and 3-trimethoxysilylpropyl isocyanate in an amount of 9.53 g were mixed in an internal Banbury mixer heated to 150°C for 10 minutes.

### Preparation of Test Pieces

The bondability of each of the polymers of Examples 1 to 2 and Comparative Examples 1 to 2 was evaluated by the following method. That is, isopropanol was used to wipe the surface of a sheet of float glass (5 x 25 x 140 mm). A strip of each polymer was adhered to the center part of the glass sheet (5 x 15 x 100 mm). The polymer was hot pressed by a press machine to give a thickness of the deposited polymer of 3 mm (180°C x 15 minutes, 4.9 MPa).

Note that the bondability to glass was evaluated by the following criteria. The results are shown in Table I.

### Bondability Test

### Evaluation of Bondability

Good... no peeling
Poor... easy peeling

Each sample was allowed to stand for 10 days under conditions of 40°C and 80% RH, then was peeled by hand.

**Table I**

| | Ex. 1 | Ex. 2 | Comp. Ex. | Comp. Ex. |
|---|---|---|---|---|
| State of silane compound | Graft | Graft | No graft | No graft |
| Bondability to glass (visual) | Good | Good | Poor | Poor |

### INDUSTRIAL APPLICABILITY

As explained above, according to the production method of a modified polymer of the present invention, for example, it is possible to simply and inexpensively introduce a compound having a desired functional group into a nonpolar polymer. The resultant polymer is useful, as a sealing material, binder, hot melt, various types of building gaskets, thermoplastic material, composite material, compatibilizer, film, sheet, packaging material, covering material, laminate, external sheet material, various types of containers, coatings, consumer electronic parts, auto parts, textiles, etc.

## Claims

1. A method for producing a modified polymer comprising: reacting a 2,2,6,6-tetramethyl piperidinyloxy (TEMPO) derivative having a functional group (A) and a polymer in the presence of a radical initiator to produce a polymer having the functional group (A) grafted thereon; and then, after optionally adding additives, reacting the resultant reaction product with a compound having a functional group (B) capable of reacting with the functional group (A).

2. A production method as claimed in claim 1, wherein the functional group (A) is a hydroxyl group.

3. A production method as claimed in claim 1 or 2, wherein the functional group (B) is an isocyanate group.

4. A production method as claimed in any one of claims 1 to 3, wherein the compound having the functional group (B) is a silane compound.

5. A modified polymer produced by a production method according to any one of claims 1 to 4.

6. A polymer composition comprising a modified polymer according to claim 5.

7. A polymer composition as claimed in claim 6 having bondability with glass, wherein the modified polymer is produced by claim 3.
